# EUROPEAN PATENT SPECIFICATION

(11) **EP 4 349 581 B1**
(45) Date of publication and mention of the grant of the patent: **09.07.2025**
(21) Application number: 23201937.2
(22) Date of filing: 05.10.2023
(51) Int. Cl.: B29D 30/02, B60C 7/00, B60C 7/10, B60C 7/14

(54) **METHOD FOR PRODUCING A NON-PNEUMATIC TIRE AND NON-PNEUMATIC TIRE**
VERFAHREN ZUR HERSTELLUNG EINES LUFTLOSEN REIFENS UND LUFTLOSER REIFEN
PROCÉDÉ DE FABRICATION D'UN PNEU NON PNEUMATIQUE ET PNEU NON PNEUMATIQUE

(30) Priority: 06.10.2022 US 202217938343
(43) Date of publication of application: 10.04.2024
(73) Proprietor: The Goodyear Tire & Rubber Company, Akron, OH 44316 (US)
(72) Inventor: SIFFER, Frederic Gerard Auguste, 7542 Mersch (LU); SPORTELLI, Francesco, 3249 Bettembourg (LU); BHUIYAN, Md Atiqur Rahman, 44321 Copley (US)
(74) Representative: Kutsch, Bernd

(56) References cited:
- US-A1- 2019 299 717
- US-B2- 11 027 578
- MONTE S J: "Making nano technology work in foams using 1.5 nanometer titanate and zirconate coupling agents - a review", CELLULAR POLYMERS, RAPRA TECHNOLOGY LTD. SHAWBURY, SHREWSBURY, GB, vol. 28, no. 1, 1 January 2009 (2009-01-01), pages 41 - 111, XP001520362, ISSN: 0262-4893

## Description

### Field of the Invention

The present invention generally relates to assembling a rubber part and a thermoplastic elastomer part into a composite structure. More specifically, the invention relates to durably assembling such a composite structure wherein the rubber part is or is part of a shear band and wherein the thermoplastic elastomer part is or is part of a connecting structure. The composite structure may be a vehicle tire or may be part of a vehicle tire, e.g., a non-pneumatic tire.

### Background of the Invention

Aspects of the present invention relate to vehicle tires and, more particularly, to non-pneumatic tires.

The pneumatic tire has been the solution of choice for vehicular mobility for over a century and is still dominant on the tire market today. Pneumatic tires are efficient at carrying loads because all of their structure is involved in carrying the load. Pneumatic tires are also desirable because they have low contact pressure, resulting in lower wear on roads due to the distribution of the load of the vehicle. Pneumatic tires also have low stiffness, which ensures a comfortable ride in a vehicle. The primary drawback to a pneumatic tire is that it requires compressed fluid (e.g., air or an inert gas). A conventional pneumatic tire is rendered useless after a complete loss of inflation pressure.

A tire designed to operate without inflation pressure may eliminate many of the problems and compromises associated with a pneumatic tire. Neither pressure maintenance nor pressure monitoring is required. Structurally supported tires such as solid tires or other elastomeric structures to date have not provided the levels of performance required from a conventional pneumatic tire. A structurally supported tire solution that delivers pneumatic tire-like performance would be a desirous improvement.

Non pneumatic tires are typically defined by their load carrying efficiency. So-called "bottom loaders" are essentially rigid structures that carry a majority of the load in the portion of the structure below the hub. "Top loaders" are designed so that all of the structure is involved in carrying the load. Top loaders thus have a higher load carrying efficiency than bottom loaders, allowing a design that has less mass.

A shear band may be provided to transfer the load from contact with the ground through tension in the connecting structure (including, e.g., spokes or a connecting web) to the hub, creating a top loading structure. When such a shear band deforms, its preferred form of deformation is shear over bending. The shear mode of deformation may occur because of inextensible membranes located on the radially inner and the radially outer portions of the shear band. Non-pneumatic tires may have a shear band made from a shear layer sandwiched between at least two layers of inextensible belts or membranes. The use of all-rubber shear layers may increase the cost and weight of the non-pneumatic tire. Another disadvantage to the use of rubber is that is generates heat, particularly in the shear band. Furthermore, the rubber in the shear band needs to be soft in shear, which makes it difficult to find the desired compound. Alternatives to rubber-based shear layers have thus been proposed.

US 2017/0297371 A1 discloses a non-pneumatic tire, which includes a ground contacting annular tread portion, a shear band, and a connecting web positioned between a hub and the shear band. US 2017/0297371 A1 specifically relates to the shear band, which is preferably comprised of a three-dimensional spacer fabric having a first and second layer connected by connecting members. The three-dimensional spacer fabric has a defined depth. The three-dimensional spacer structure further includes a plurality of cells formed between the connecting members, and wherein one or more of the cells are filled with a filler material. The filler material may be foam or a thermoplastic elastomer.

Another issue of importance in non-pneumatic tires is the connection between the shear band and the connecting structure. The connecting structure is the part of a non-pneumatic tire that connects the shear band to the wheel hub or to a ring structure that contacts the hub. The role of the connecting structure may be compared with the cushioning function of the air chamber of a pneumatic tire.

US 11,027,578 B2 discloses a wheel and tire assembly including a plurality of support elements for supporting part of a load of a vehicle and an annular shear band extending circumferentially around the support elements. The shear band has a radially inner circumferential membrane, a radially outer circumferential membrane, and a shear layer interconnecting the inner membrane and the outer membrane. The shear layer has a plurality of transversely adjacent closed cells for controlling shear deflection between the inner membrane and the outer membrane. The closed cells form a honeycombed structure with each cell extending radially and entirely between the inner membrane and the outer membrane in the sense that no other closed cells are present radially between the inner membrane and the outer membrane. The shear band may be secured to the support elements by resorcinol-formaldehyde-latex.

US 2019/299717 A1 relates to another wheel and tire assembly, wherein the shear band has a radially inner circumferential membrane, a radially outer circumferential membrane, and a shear layer interconnecting the inner membrane and the outer membrane for controlling shear deflection between the inner membrane and the outer membrane. The shear layer defines a connecting film layer radially sandwiched between a first radially inner, cylindrical flat film layer and a second radially outer, cylindrical film layer. The connecting film layer defines a periodic wave shape as the connecting film layer extends circumferentially between the first and second film layers.

The connecting structure may be made of a different material than the shear band. In particular, the connecting structure may be made of a thermoplastic elastomer material, whereas the radially inner surface of the shear band may be provided by a rubber compound.

### Summary of the Invention

The invention relates to a method in accordance with claim 1.

Dependent claims refer to preferred embodiments of the invention.

In a general aspect of the invention, a method of durably assembling a rubber part and a thermoplastic elastomer part into a composite structure is proposed. The method may comprise providing a first part comprising curable rubber and a second part made of thermoplastic elastomer (TPE) material, mediating an adhesive affinity on the at least one of the first and second parts for the other one of the at least two parts, bringing the first and second parts into contact with each other so as to form a composite structure and heat-treating the composite structure to durably bond the first part to the second part. According to a preferred embodiment, the adhesive affinity may be mediated through adhesive applied on the at least one of the first and second parts. The adhesive may comprise, e.g., an RFL adhesive or a solution of at least one of a neoalkoxy zirconate and a neoalkoxy titanate. According to a preferred embodiment, the rubber part could have at least one of a neoalkoxy zirconate content and a neoalkoxy titanate content mediating the durable bond with the TPE material when heat-treated.

In a first more specific aspect, the invention relates to a method for producing a non-pneumatic tire. The method may comprise providing a shear band comprising curable rubber, the shear band having a radially inner surface formed by the curable rubber; providing a connecting structure for connecting the shear band to a wheel hub, the connecting structure comprising at least one interface part made of thermoplastic elastomer material; applying a RFL adhesive on the at least one interface part or on the radially inner surface of the shear band; assembling the shear band and the connecting structure into a composite structure, the assembling of the shear band and the connecting structure comprising bringing the at least one interface part into contact with the radially inner surface of the shear band; and heat-treating the composite structure so as to durably bond the shear band to the connecting structure.

According to a preferred embodiment, the composite structure is assembled in a mold or placed into a mold after assembly and the heat-treatment of the composite structure comprises baking the composite structure in the mold. The rubber, the TPE material or both may be cured (vulcanized) or further cured in this baking step. The RFL adhesive is co-vulcanized with the rubber during the baking step so that the TPE material becomes cross-linked with the rubber by covalent chemical bonds. It should be noted that, prior to the heat treatment of the assembled composite structure as a whole, the at least one RFL adhesive may be dried and pre-cured on the at least one interface part. Both the drying and the pre-curing may be carried out before assembling the shear band and the connecting structure through one or more heat treatments of the at least one interface part coated with the at least one RFL adhesive.

According to a preferred embodiment, the TPE material may comprise at least one of ester moieties, terephthalate moieties, secondary amine functional groups, tertiary amine functional groups, and amide groups. The thermoplastic elastomer material may comprise a thermoplastic copolyester or a thermoplastic polyamide, e.g,, Nylon 6, Nylon 6,6 or Nylon 6,12.

Heat-treating the composite structure may comprise heating the composite structure to a temperature in a range from 120°C to 200°C or from 140°C to 200°C. Preferably, the heating is effected at a temperature below a softening temperature of the thermoplastic elastomer material.

According to a 140°C to 200°C embodiment, the RFL adhesive may be dried and/or pre-cured on the at least one interface part or on the radially inner surface of the shear band before assembling the shear band and the connecting structure into the composite structure. As said above, this drying and/or pre-curing may comprise subjecting the interface part coated with the at least one RFL adhesive to one or more heat treatments. Pre-curing the RFL adhesive is preferably carried out at a temperature close to the softening temperature of the TPE material, so that a mobility of polymer chains at the surface of the interface part increases and promotes bonding of the RFL adhesive to the substrate. The temperature for the pre-curing could be selected equal to or somewhat (e.g., up to 15°C) below the softening temperature of the TPE material or slightly (e.g., up to 15°C) above the softening temperature of the TPE material. It will be understood that the higher the temperature, the shorter one may set the time of the pre-curing in order to arrive at a temperature at the surface of the TPE material which is effective for bonding the RFL adhesive to the substrate.

The at least one RFL adhesive may include a polymer latex based on at least one of polyisoprene rubber, styrene-butadiene rubber, acrylonitrile-butadiene rubber, hydrogenated acrylonitrile-butadiene rubber, epoxidized natural rubber and 2-vinylpyridine rubber. The composition of the RFL adhesive may be adapted to the rubber part and the TPE part to be bonded. The at least one RFL adhesive may comprise a combination of two or more RFL adhesives. According to a preferred embodiment, the at least one RFL adhesive may comprise a combination of a subcoat RFL adhesive, which is applied directly on the at least one interface part, and a topcoat RFL, which is applied on the subcoat RFL adhesive. The subcoat RFL adhesive may be specifically adapted for optimized bonding to the TPE material while the topcoat RFL adhesive may be specifically adapted for optimized bonding to the rubber of the shear band. When a combination of a subcoat RFL adhesive and a topcoat RFL adhesive is employed, the subcoat RFL adhesive may be dried and pre-cured before the topcoat RFL adhesive is applied. The topcoat RFL adhesive is preferably dried and cured before the shear band and the connecting structure are assembled and bonded to each other.

According to a preferred embodiment, the at least one interface part or the radially inner surface of the shear band is roughened prior to application of the at least one RFL adhesive thereon. The at least one interface part and the radially inner surface of the shear band may both be roughened prior to application of the RFL adhesive and assembling the shear band and the connecting structure into the composite structure.

In a further aspect, the invention relates to a method for producing a non-pneumatic tire, comprising: providing a shear band comprising curable rubber; the shear band having a radially inner surface formed by the curable rubber; providing a connecting structure for connecting the shear band to a wheel hub, the connecting structure comprising at least one interface part made of TPE material; applying an adhesive on the at least one interface part or on the radially inner surface of the shear band, the adhesive comprising a solution of at least one of a neoalkoxy zirconate and a neoalkoxy titanate; assembling the shear band and the connecting structure into a composite structure, the assembling of the shear band and the connecting structure comprising bringing the at least one interface part into contact with the radially inner surface of the shear band; and heat-treating the composite structure so as to durably bond the shear band to the connecting structure.

According to a preferred embodiment, the composite structure may be assembled in a mold or placed into a mold after assembly. The heat-treatment of the composite structure may comprise baking the composite structure in the mold. The rubber, the TPE material or both may be cured or further cured in this baking step.

According to a preferred embodiment, the thermoplastic elastomer material may comprise at least one of terephthalate moieties, secondary amine functional groups, tertiary amine functional groups, and amide groups.

According to a preferred embodiment, the TPE material may comprise a thermoplastic copolyester, or a thermoplastic polyamide, e.g,, Nylon 6, Nylon 6,6 or Nylon 6,12.

According to a preferred embodiment, heat-treating the composite structure may comprise heating the composite structure to a temperature in a range from 120°C to 200°C, preferably in a range from 140°C to 180°C. The temperature of the heat-treatment of the composite structure may be selected below a softening temperature of the TPE material.

The method may comprise drying the adhesive on the at least one interface part or on the radially inner surface of the shear band before assembling the shear band and the connecting structure into the composite structure. The drying of the adhesive on the at least one interface part may be effected through a heat treatment prior to the heat treatment of the assembled composite structure as a whole.

According to a preferred embodiment, the at least one interface part or the radially inner surface of the shear band may be roughened prior to application of the adhesive. The at least one interface part and the radially inner surface of the shear band may both be roughened prior to application of the adhesive and assembling the shear band and the connecting structure into the composite structure.

In yet a further aspect of the invention, a method for producing a non-pneumatic tire, comprises: providing a shear band comprising curable rubber; the shear band having a radially inner surface formed by the curable rubber, the curable rubber having at least one of a neoalkoxy zirconate content and a neoalkoxy titanate content; providing a connecting structure for connecting the shear band to a wheel hub, the connecting structure comprising at least one interface part made of thermoplastic elastomer material; assembling the shear band and the connecting structure into a composite structure, the assembling of the shear band and the connecting structure comprising bringing the at least one interface part into contact with the radially inner surface of the shear band; and heat-treating the composite structure so as to create a durable bond between the shear band and the connecting structure, the bond being mediated by at least part of the neoalkoxy zirconate or neoalkoxy titanate content.

According to a preferred embodiment, the treatment may cause at least part of the neoalkoxy zirconate or neoalkoxy titanate content to migrate toward the radially inner surface and to mediate the bond.

According to a preferred embodiment, the composite structure may be assembled in a mold or placed into a mold after assembly. The heat-treatment of the composite structure may comprise baking the composite structure in the mold. The rubber, the TPE material or both may be cured or further cured in this baking step. The baking could be carried out at a temperature in a range from 120°C to 200°C, preferably in a range from 140°C to 180°C. The temperature of the heat treatment may be below a softening temperature of the TPE material.

According to a preferred embodiment, the TPE material comprises a thermoplastic copolyester, a thermoplastic polyamide or a thermoplastic polyurethane. Additionally, or alternatively, the TPE material could comprise at least one of terephthalate moieties, secondary amine functional groups, tertiary amine functional groups, and amide groups.

Examples of neoalkoxy zirkonates that may be used in the context of the present invention include: Zirconium IV 2,2(bis-2-propenolatomethyl)butanolato, tris(dioctyl)phosphato-O; Zirconium IV 2,2(bis-2-propenolatomethyl)butanolato, tris 2-methyl-2-propenoato-O; Zirconium IV 2,2(bis-2-propenolatomethyl)butanolato, tris(dioctyl)pyrophosphato-O; Zirconium IV 2,2(bis-2-propenolato)butanolato, tris 2-propenoato-O; Zirconium IV 2,2(bis-2-propenolatomethyl)butanolato, tris(2-ethylenediamino)ethylato; Zirconium IV 2,2(bis-2-propenolatomethyl)butanolato, tris neodecanolato-O; Zirconium IV 2.2(bis-2-propenolatomethyl)butanolato, tris(dodecyl)benzenesulfonato-O; Zirconium IV bis 2,2(bis-2-propenolatomethyl)butanolato, bis(para amino benzoato-O); Zirconium IV bis 2,2(bis-2-propenolatomethyl)butanolato, bis(3-mercapto)propionato-O and Zirconium IV 1,1(bis-2-propenolatomethyl)butanolato, tris(2-amino)phenylato.

Examples of neoalkoxy titanates that may be used in the context of the present invention include: Titanium IV 2,2(bis 2-propenolatomethyl)butanolato, tris(2-ethylenediamino)ethylato; Titanium IV 2,2(bis 2-propenolatomethyl)butanolato, tris(3-amino)phenylato; Titanium IV 2,2(bis 2-propenolatomethyl)butanolato, tris neodecanoato-O; Titanium IV 2,2(bis 2-propenolatomethyl)butanolato, iris(dodecyl)benzenesulfonato-O; Titanium IV 2,2(bis 2-propenolatomethyl)butanolato, tris(dioctyl)phosphato-O and Titanium IV 2,2(bis 2-propenolatomethyl)butanolato, tris(dioctyl)pyrophosphato-O.

### Definitions

As used herein, the term "rubber" is intended to include both natural rubber compositions and synthetic rubber compositions. "Rubber" may designate a cured rubber (typically obtained from unsaturated rubber by sulfur or non-sulfur vulcanization). Before the heat treatment that bonds the TPE part to the rubber part, the rubber may be curable rubber, i.e., its molecular chains may contain residual cure sites (e.g., allylic positions) available for crosslinking with other molecular chains. The expression "rubber composition" "compounded rubber" and "rubber compound" may be used interchangeably to refer to rubber (elastomer) which has been blended or mixed with various ingredients and materials, e.g., reinforcing fillers, such as carbon black, precipitated amorphous silica, or the like. Specific examples of rubbers include neoprene (polychloroprene), polybutadiene (e.g., cis-1,4-polybutadiene), polyisoprene (e.g., cis-1,4-polyisoprene), butyl rubber, halobutyl rubber (such as, e.g., chlorobutyl rubber or bromobutyl rubber), styrene/isoprene/butadiene rubber, copolymers of 1,3-butadiene or isoprene with monomers such as, e.g., styrene, acrylonitrile and methyl methacrylate. Other types of rubber include carboxylated rubber, silicon-coupled rubber, or tin-coupled star-branched polymers. "Curable rubber" designates rubber that has been at most partially cured and that can be cured (vulcanized) further. Curable rubber may include or consist of green (uncured) rubber.

The expression "thermoplastic elastomer" or its abbreviated version "TPE" herein refers to a polymer or blend of polymers that has properties at its service temperature similar to those of vulcanized rubber but can be processed and reprocessed at elevated temperature like a thermoplastic. A TPE may be a substance in which elastic polymer chains are integrated in a thermoplastic material. It can be worked in a purely physical process in combination with high shear forces, the action of heat and subsequent cooling. However, chemical crosslinking does not necessarily occur through the time and heat combining process. Commercially available TPEs include (designations according to ISO 18064:2022): thermoplastic polyamides (TPA) thermoplastic copolyester (TPC), thermoplastic polyolefinelastomers (TPO), styrenic block copolymers (TPS), thermoplastic polyurethanes (TPU), thermoplastic vulcanizates (TPV) and not classified TPEs (TPZ). Among the available TPEs, TPC and TPA, in particular Nylon 6,12, Nylon 6 and Nylon 6,6, may be preferred in the context of the present invention.

A "thermoplastic" is a plastic polymer that becomes pliable or moldable at an elevated temperature and solidifies upon cooling. Thermoplastics can be shaped by the action of heat and shear forces. The process is purely physical and does not involve either chemical transformation or crosslinking. The thermoplastics can include semi-crystalline (polypropylene, polyethylene, etc.) and/or amorphous thermoplastics (polystyrene, ABS, PC, etc.)

The expressions "axial" and "axially" are used herein to refer to lines or directions that are parallel to the axis of rotation of the tire.

The expressions "radial" and "radially" are used to mean the direction of a line intersecting the tire's axis of rotation at right angle.

The expression "meridian plane" is used to mean a plane that contains the tire's axis of rotation.

The expression "phr" means parts by weight per hundred parts by weight of elastomer.

As used herein, and unless contradicted by context, the expressions "RFL", "RFL adhesive", "RFL dip", "RFL subcoat", "RFL topcoat", etc., are intended to encompass (conventional) resorcinol-formaldehyde-latex compositions as well as RFL analogs, in particular more health, safety and environment friendly (HSE-friendly) RFL analogs, such as, e.g., the RFL analogs disclosed in US 2022/056244 A1. In the RFL analogs described in US 2022/056244 A1, resorcinol is replaced by phloroglucinol and formaldehyde is replaced by tris(hydroxymethyl)nitromethane, a formaldehyde donor. Bis-oxazolidine is also considered as an analog for formaldehyde as a formaldehyde donor.

In the present document, the verb "to comprise" and the expression "to be comprised of" are used as open transitional phrases meaning "to include" or "to consist at least of". Unless otherwise implied by context, the use of singular word form is intended to encompass the plural, except when the cardinal number "one" is used: "one" herein means "exactly one". Ordinal numbers ("first", "second", etc.) are used herein to differentiate between different instances of a generic object; no particular order, importance or hierarchy is intended to be implied by the use of these expressions. Furthermore, when plural instances of an object are referred to by ordinal numbers, this does not necessarily mean that no other instances of that object are present (unless this follows clearly from context). When reference is made to "an embodiment", "one embodiment", "embodiments", etc., this means that these embodiments may be combined with one another. Furthermore, the features of those embodiments can be used in the combination explicitly presented but also that the features can be combined across embodiments without departing from the invention, unless it follows from context that features cannot be combined.

### Brief Description of the Drawings

The invention will be described by way of example and with reference to the accompanying drawings in which:
- FIG. 1: is a perspective schematic view of a non-pneumatic tire;
- FIG. 2: is a partial side elevational view of the non-pneumatic tire of Fig. 1; and
- FIG. 3: is a view of the cross section III-III of Fig. 2.

### Detailed Description of Preferred Embodiments of the Invention

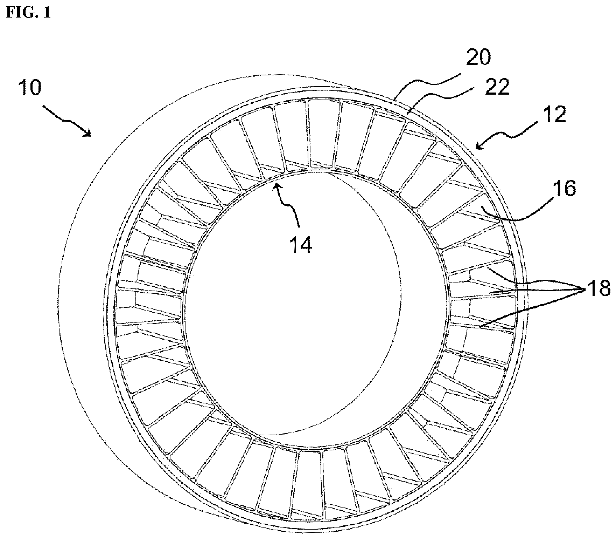

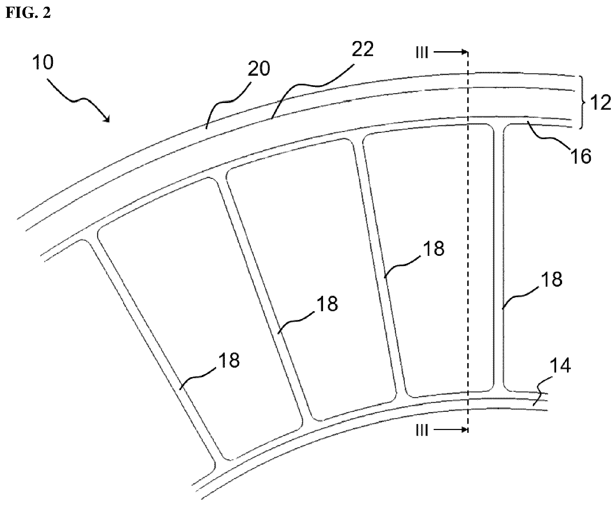

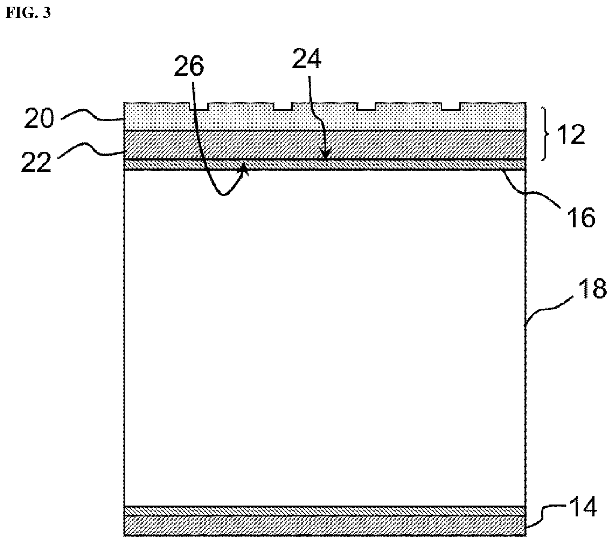

A non-pneumatic tire is shown in FIGS. 1-3. The non-pneumatic tire 10 may be of the top-loader type and include an outer annular band 12, an inner annular band 14, and a connecting structure 16 extending from the outer annular band 12 to the inner annular band 14. The inner annular band 14 has a first diameter, and the outer annular band 12 has a second diameter greater than the first diameter. The inner and outer annular bands 12, 14 are substantially coaxial with each other and centered on the tire axis. In the illustrated embodiment, the connecting structure 16 comprises a plurality of spokes 18 but other configurations may be possible.

The inner annular band 14 may be mounted on a hub or rim (not shown). The outer annular band 12 may include a circumferential tread 20 providing a ground-contacting surface of the non-pneumatic tire 10 and a shear band 22. The tread 20 may include tread features such as, e.g., grooves, ribs, blocks, lugs, sipes, studs, etc. The tread 20 may be configured to improve the performance of the tire in various conditions.

The shear band 22 is configured to receive the load exerted on the inner ring as tension in connecting structure 16 and to transfer this load to the ground, via the tread 20. When such the shear band 22 deforms under load, its preferred form of deformation is shear over bending. The shear mode of deformation may occur because of inextensible membranes located on the radially inner and the radially outer portions of the shear band but other possibilities may exist. The inner structure of the shear band 22 is not illustrated in the drawings. The shear band 22 could, for instance, include a sandwich structure with first and second reinforced annular rubber layers separated by an annular shear layer. The first and second reinforced rubber layers may be configured as essentially inextensible layers, e.g., may be formed of parallel inextensible reinforcement cords embedded in a rubber coating. The reinforcement cords could comprise, e.g., steel, aramid, or other fibers.

The shear band 22 and the connecting structure 16 may be configured so that the resulting stiffness is related to the spring rate of the tire 10. The connecting structure 16 may be configured to buckle or deform in the tire footprint (i.e., the part of the tire that is in contact with the ground). This implies that the rest of the connecting structure not in the footprint area (i.e., mainly the momentary upper part of the connecting structure) carries the load. The load distribution may be such that approximately 90-100% of the load is carried by the shear band and the momentary upper part of the connecting structure, so that the momentary lower part of the connecting structure carry only a small part of the load, and preferably less than approximately 10%.

The connecting structure 16 is preferably formed of TPE material. The TPE material may be selected based upon one or more of the following material properties: Young's modulus, glass transition temperature, yield strain at break, elongation at break, heat deflection temperature, etc. A TPE material having a tensile (Young's) modulus in the range from 45 MPa to 650 MPa, and more preferably in the range of 85 MPa to 300 MPa, measured in accordance with the ISO 527-1/-2 standard test method, may be preferred. TPE material having a glass transition temperature less than -25°C, and more preferably less than -35°C, may be considered advantageous. The yield strain at break of the TPE may preferably amount to at least 30%, and more preferably to at least 40%. The TPE material preferably has an elongation at break greater than or equal to the yield strain, and more preferably, greater than or equal to 200%. The heat deflection temperature may preferably be higher than 40°C, and more preferably more than 50°C, under a load of 0.45 MPa. Examples of TPEs for the connecting structure include the TPC products sold under the designations ARNITEL PM581, PL461, EM460, EM550, EM630 by DSM Products, Hytrel by DuPont, and the TPA product VESTAMID DX9303 (Nylon 6,12) supplied by Evonik.

Examples of methods useful for producing non-pneumatic tire 10 are discussed below.

The connecting structure 16 and the shear band 22 may initially be provided as separate parts. The connecting structure 16 may be prefabricated by any suitable process, e.g., extrusion, injection molding, thermoforming, heat welding, 3D printing, etc. The connecting structure 16 and the shear band 22 may each be provided as a single part or as a plurality of parts to be assembled. The connecting structure 16 comprises a radially outer surface, which is to become the interface 24 with the shear band 22. The shear band 22 has a radially inner surface formed by curable rubber, which is to serve as a contact surface 26 with the connecting structure 16.

According to a first embodiment of a method for producing non-pneumatic tire 10, an adhesive is then spread (e.g., by brushing or by spray-coating ) on the radially outer surface of the connecting structure 16 or on the radially inner surface of the shear band 22.

Prior to application of the adhesive, one or more cleaning steps of the contact surfaces may be carried out, if necessary. Additionally, or alternatively, preparation of one or both of the contact surfaces may include roughening and/or application of a pre-treatment agent. For instance, the pre-treatment agent could be applied on the radially outer surface of the connecting structure in order to activate the TPE, i.e., give the TPE material the bonding functionality for the employed adhesive. Such a pre-treatment agent could, e.g., include a (blocked) isocyanate. It will be appreciated that a treatment with (blocked) isocyanate of a TPC material may be advantageous for compatibilization of the TPC material with an RFL adhesive. As a further possibility, preparation of one or both of the contact surfaces may include an atmospheric pressure plasma treatment. Such plasma treatment may be effective to increase the surface tension and thus favor the interaction between the TPE material and the adhesive. Different surface preparation techniques may be combined when needed. Cleaning and/or roughening could be effected, for instance, by dry ice blasting, sand blasting or like techniques.

Optionally, the adhesive is dried after application.

After application of the adhesive, the shear band and the connecting structure are assembled into a composite structure by bringing the interface part of the connecting structure into contact with the radially inner surface of the shear band. The green rubber to become the tread 20 may be arranged adjacent the radially outer surface of the shear band. The assembly of the individual parts may be carried out in a mold, or the assembled composite structure may be placed into a mold after assembly.

After assembly, the composite structure may be heated so as to durably bond the different parts, in particular the shear band and the connecting structure. The rubber parts may be cured during the same heat treatment step.

It will be understood that the adhesive mediates chemical bonding (including covalent and/or ionic bonding) between the shear band and the connecting structure only upon being subjected to the heat treatment. Nevertheless, the adhesive may be configured to increase the tack of the surface on which it is applied (in wet or dried state). This may be seen as helpful for the assembly and manipulation of the composite structure while it is still uncured. For instance, increased tack may be helpful to position the shear band and the connecting structure relative to each other and to keep these parts in that position until the curing has been effected.

The TPE material of the connecting structure is chosen such that it comprises chemical groups capable of reacting with the adhesive and/or the rubber of the shear band at the vulcanization temperature of the curable rubber parts. The TPE material may contain, e.g., among other chemical groups, a significant concentration of terephthalic acid moieties, capable of reacting with an RFL dip.

The TPE material may include, without being limited thereto, ester moieties, terephthalate moieties, secondary amine functional groups, tertiary amine functional groups, and/or amide groups. Preferred examples of TPE include TPC and TPA, e.g., Nylon 6,12, Nylon 6 or Nylon 6,6.

The vulcanization of the rubber parts and the bonding of the shear band to the connecting structure is preferably carried out at a temperature below the softening temperature of the TPE material. The curing temperature may, e.g., be located in the range from 120°C to 180°C with the proviso that the softening temperature of the employed TPE material is not exceeded.

According to a first example, the adhesive comprises a subcoat RFL adhesive adapted to the TPE material of the connecting structure 16 and a topcoat RFL adhesive adapted to the rubber material of the radially inner surface of the shear band 22. The RFL adhesives may include a polymer latex based on at least one of polyisoprene rubber, styrene-butadiene rubber, acrylonitrile-butadiene rubber, hydrogenated acrylonitrile-butadiene rubber and 2-vinylpyridine rubber. The combination of the RFL adhesives is preferably adapted to the rubber part and the TPE part to be bonded.

### Example A

Adhesion mediated by RFL adhesive between TPE material and a rubber component was successfully demonstrated. 6" x 6" (15.24 cm x 15.24 cm) TPC plates (ARNITEL PM581 and PL461) were manually roughened with P120 sandpaper and wiped clean with isopropanol. An RFL subcoat was applied with a brush onto the TPC plates, which were then placed into an oven at 138°C for 3 minutes for drying the RFL subcoat. The RFL-coated plates were then quickly put into another oven at 210°C for 5 minutes for curing the RFL subcoat. The plates were then cooled down to room temperature prior to applying an RFL topcoat with a brush. The RFL-coated plates were then placed into an oven at 138°C for 3 minutes for drying the RFL topcoat adhesive. The plates were then quickly put into another oven at 210°C for 5 minutes for curing the RFL topcoat adhesive. The plates were then removed from the oven and cooled down to room temperature - the thus prepared plates were now ready for being assembled and cured with a rubber compound.

A 3-cm-wide Mylar film was placed along one edge of the RFL-treated plates to keep the rubber and the TPE material unbonded along this edge so that the rubber and the TPE material could be gripped by the testing equipment and the peel could be initiated. The RFL-treated TPC plates were covered with a 1.5-mm-thick layer of a first rubber compound. A layer of textile-reinforced rubber compound was then placed on top of the first rubber compound layer. The cords direction was chosen parallel to the peel direction and the fabric was RFL-dipped for adhesion with rubber. The composite structures thus formed were then cured in a press at 150°C for 18 minutes.

A peel resistance test (T-peel test) was then carried out. The cured composite structures were die-cut into 1"-wide (2.54-cm-wide) strips. The unbonded ends of each test specimen were clampled in the test grips of the tension testing machine. Peeling was then carried out at a 180-degree angle at a rate of 50.8 mm/min. The T-peel test was thus carried out as set out in ASTM D1876 except that the speed was reduced to 50% of the mentioned value in order to avoid high forces capable of inducing plastic deformation of the TPE material.

Peel strength of the tested specimens was found to be 13 N/mm ± 3 N/mm. Rubber coverage was found to be 90% ± 10% by visual estimation of the torn rubber area that remains bonded to the RFL-treated plate after completion of the peel test.

The following materials were used in this example:

| TABLE 1: Rubber compound formulation | |
|---|---|
| **INGREDIENT** | **Parts by weight** |
| Natural rubber (cis-1,4-polyisoprene) | 70 |
| Emulsion SBR rubber (extended with 37.5 phr of TDAE oil) | 30 |
| N660 carbon black | 60 |
| TDAE processing oil | 14.9 |
| Phenolic tackifier | 3.5 |
| Stearic acid | 1 |
| Zinc oxide | 2 |
| Sulfur | 2.1 |
| Sulfenamide accelerator(s) | 1.6 |

| TABLE 2: subcoat RFL adhesive formulation | |
|---|---|
| **INGREDIENT** | **Parts by weight** |
| Water | 490 |
| Resorcinol | 14 |
| Formaldehyde | 18 |
| Sodium hydroxide | 17 |
| Polyisocyanates (caprolactam-blocked methylene diphenyl diisocyanate) | 46 |
| Pre-reacted resorcinol-formaldehyde resin | 50 |
| Vinylpyridine latex | 315 |
| Carbon black | 50 |

| TABLE 3: topcoat RFL adhesive formulation | |
|---|---|
| **INGREDIENT** | **Parts by weight** |
| Water | 550 |
| Resorcinol | 16 |
| Formaldehyde | 21 |
| Sodium hydroxide | 19 |
| Vinylpyridine latex | 181 |
| SBR latex | 188 |
| Carbon black | 25 |

According to a second example, the adhesive comprises or consists of a solution of neoalkoxy zirconate or neoalkoxy titanate. When bonding is mediated by neoalkoxy zirconates or neoalkoxy titanates, allylic groups of the neoalkoxy zirconate or titanate molecule participate to the sulfur crosslinking while amine and polar groups of the neoalkoxy zirconate or titanate molecule create strong bonds with specific functionalities of the TPE polymer (ester groups for TPC and amide groups for nylons).

Solutions of neoalkoxy zirconate or neoalkoxy titanate may, e.g., be water-based or a solvent-based with a neoalkoxy zirconate or neoalkoxy titanate content in the range from 0.3 wt.% to 5 wt.%, more preferably from 1 wt.% to 2 wt.%.

### Example B

TPC plates were dimensioned as in Example A. Neoalkoxy titanate or zirkonate was dissolved in appropriate solvent at a concentration between 0.05 wt.% and 10 wt.% (preferably between 0.05 wt.% and 1 wt.%). The appropriate solvent is selected based upon the structure/polarity of the selected titanate or zirkonate. Possible solvents include, e.g., C7-alkanes, isopropyl alcohol, toluene, xylene, etc. The surface of the TPE plates was roughened with grit comprised between P80 and P600 (FEPA) and more preferably between P120 and P400. The TPE surface was then wiped clean with appropriate solvents (e.g., first with acetone, then with isopropanol). The dilute solution of titanate or zirconate was then applied onto the roughened and cleaned TPE surface by brushing or spraying. The coated TPE plates were dried in an oven at a temperature between 40°C and 150°C (preferably between 50°C and 80°C) for a time between 10 minutes and 60 minutes (preferably between 10 minutes and 30 minutes). The thus prepared plates were now ready for being assembled and cured with a rubber compound.

A 3-cm-wide Mylar film was placed along one edge of the titanate or zirconate-coated plates to keep the rubber and the TPE material unbonded along this edge so that the rubber and the TPE material could be gripped by the testing equipment and the peel could be initiated. The titanate or zirconate-coated TPC plates were covered with a 1.5-mm-thick layer of a first rubber compound. A layer of textile-reinforced rubber compound was then placed on top of the first rubber compound layer. The cords direction was chosen parallel to the peel direction and the fabric was RFL-dipped for adhesion with rubber. The composite structures thus formed were then cured in a press at 170°C for 20 minutes.

The cured composite structures were die-cut into 1"-wide (2.54-cm-wide) strips and peel resistance tests (T-peel test) were carried out as in Example A.
The TPC plates and the rubber compound used in Example B were of the same formulations as in Example A. Neoalkoxy titanates used in Example B included LICA 44 and LICA 97 (both from Kenrich Petrochemicals, Inc.) Neoalkoxy zirkonates used in Example B included NZ44, NZ37, NZ66A and NZ97 (all from Kenrich Petrochemicals, Inc.)

According to a further embodiment of a method for producing the non-pneumatic tire 10, the curable rubber providing the radially inner contact surface of the shear band 22 has at least one of a neoalkoxy zirconate content and a neoalkoxy titanate content. According to this embodiment, application of a separate adhesive may not be necessary as the durable bond between the shear band and the connecting structure is mediated by (at least part of) the neoalkoxy zirconate or neoalkoxy titanate content during the heat treatment. As in the previously discussed examples, the connecting structure 16 and the shear band 22 may initially be provided as separate parts. These are then assembled by bringing the at least one interface part into contact with the radially inner surface of the shear band. A durable bond between the shear band and the connecting structure is obtained through heat-treatment of the composite structure. Chemical bonding is mediated by the neoalkoxy zirconate or neoalkoxy titanate content that is at or close to the contact surface.

The composite structure may be assembled in a mold or placed into a mold after assembly. The heat-treatment of the composite structure may comprise baking the composite structure in the mold. The rubber, the TPE material or both may be cured or further cured in this baking step. The baking could be carried out at a temperature in a range from 120°C to 180°C provided that the temperature of the heat treatment remains below the softening temperature of the TPE material.

Along with rubber vulcanization taking place during the baking, part of the neoalkoxy zirconate or neoalkoxy titanate content may be caused to migrate toward the radially inner surface of the shear band so as to contribute to the bond.

Prior to bringing the shear band and the connecting structure into contact with each other, one or more surface preparation steps of the contact surfaces may be carried out, if necessary. Surface preparation may include, for instance, cleaning of the surfaces. Additionally, or alternatively, preparation of one or both of the contact surfaces may include roughening and/or application of a pre-treatment agent. For instance, the pre-treatment agent could be applied on the radially outer surface of the connecting structure in order to activate the TPE, i.e., give the TPE material the bonding functionality for the zirconate- or titanate-enriched rubber. Such a pre-treatment agent could, e.g., include a (blocked) isocyanate. As a further possibility, preparation of one or both of the contact surfaces may include an atmospheric pressure plasma treatment. Such plasma treatment may be effective to increase the surface tension and thus favor the interaction between the TPE material and the zirconate- or titanate-enriched rubber. Different surface preparation techniques may be combined when needed. Cleaning and/or roughening could be effected, for instance, by dry ice blasting, sand blasting or like techniques.

### Example C

TPC plates were dimensioned as in Example A. A rubber compound comprising neoalkoxy titanate or zirkonate content was prepared. Neoalkoxy zirconate or titanate is added during the mixing of the rubber compound: the zirconate or titanate is added during the first stage of mixing of the rubber compound together with the elastomer (e.g., natural rubber, SBR and/or polybutadiene) as well as carbon black. The amount of zirconate or titanate to add is between 1 phr and 10 phr and more preferably between 1 phr and 5 phr

This rubber compound featuring added zirconate/titanate can be seen as a "bonding layer".

The surface of the TPE plates was roughened with grit comprised between P80 and P600 (FEPA) and more preferably between P120 and P400. The TPE surface was then wiped clean with appropriate solvents (e.g., first with acetone, then with isopropanol). The thus prepared plates were now ready for being assembled and cured with a rubber compound.

A 3-cm-wide Mylar film was placed along one edge of the TPE plates to keep the rubber and the TPE material unbonded along this edge so that the rubber and the TPE material could be gripped by the testing equipment and the peel could be initiated. TPC plates were covered with a 1.5-mm-thick layer of the rubber compound comprising neoalkoxy zirconate/titanate. A layer of textile-reinforced rubber compound was then placed on top of the first rubber compound layer. The cords direction was chosen parallel to the peel direction. The composite structures thus formed were then cured in a press at 170°C for 20 minutes.

The cured composite structures were die-cut into 1"-wide (2.54-cm-wide) strips and peel resistance tests (T-peel test) were carried out as in Example A.

The TPC plates were of the same formulations as in Example A.

The rubber compound used in Example C is detailed in Table 4.

| TABLE 4: Rubber compound formulation with neoalkoxy zirconate or titanate | |
|---|---|
| **INGREDIENT** | **Parts by weight** |
| Natural rubber (cis-1,4-polyisoprene) | 70 |
| Emulsion SBR rubber (extended with 37.5 phr of TDAE oil) | 30 |
| N660 carbon black | 60 |
| Neoalkoxy zirconate or neoalkoxy titanate | 3 |
| TDAE processing oil | 14.9 |
| Phenolic tackifier | 3.5 |
| Stearic acid | 1 |
| Zinc oxide | 2 |
| Sulfur | 2.1 |
| Sulfenamide accelerator(s) | 1.6 |

Neoalkoxy titanates used in Example C included LICA 44 and LICA 97 (both from Kenrich Petrochemicals, Inc.) Neoalkoxy zirkonates used in Example C included NZ97 (from Kenrich Petrochemicals, Inc.).

## Claims

1. A method for producing a non-pneumatic tire (10), the method comprising:
providing a shear band (22) comprising curable rubber, the shear band (22) having a radially inner surface formed by the curable rubber;
providing a connecting structure (16) for connecting the shear band (22) to a wheel hub, the connecting structure (16) comprising at least one interface part (24) made of thermoplastic elastomer material;
applying an adhesive on the at least one interface part (24), the adhesive being or comprising an RFL adhesive or a solution of at least one of a neoalkoxy zirconate and a neoalkoxy titanate;
assembling the shear band (22) and the connecting structure (16) into a composite structure, the assembling of the shear band (22) and the connecting structure (16) comprising bringing the at least one interface part (24) into contact with the radially inner surface of the shear band (22); and
durably bonding the shear band (22) to the connecting structure (16) through a heat-treatment of the composite structure.

2. The method of claim 1 wherein the curable rubber has at least one of a neoalkoxy zirconate content and a neoalkoxy titanate content, and wherein the durably bonding is preferably mediated by at least part of the neoalkoxy zirconate and/or neoalkoxy titanate content.

3. The method of claim 1 or 2, wherein the composite structure is assembled in a mold or placed into a mold after assembly and wherein the heat-treatment of the composite structure comprises baking the composite structure in the mold.

4. The method of at least one of the previous claims, wherein the thermoplastic elastomer material comprises at least one of ester moieties, terephthalate moieties, secondary amine functional groups, tertiary amine functional groups, and amide groups.

5. The method of at least one of the previous claims, wherein the thermoplastic elastomer material comprises a thermoplastic copolyester or a thermoplastic polyamide.

6. The method of at least one of the previous claims, wherein heat-treating the composite structure comprises heating the composite structure to a temperature in a range of from 120°C to 200°C or in a range of from 140°C to 200°C.

7. The method of at least one of the previous claims, comprising drying and pre-curing the RFL adhesive on the at least one interface part (24) or on the radially inner surface of the shear band (22) before assembling the shear band (22) and the connecting structure (16) into the composite structure.

8. The method of at least one of the previous claims, wherein the RFL adhesive includes a polymer latex based on at least one of polyisoprene rubber, styrene-butadiene rubber, acrylonitrile-butadiene rubber, hydrogenated acrylonitrile-butadiene rubber, epoxidized natural rubber and 2-vinylpyridine rubber.

9. The method of at least one of the previous claims, wherein the at least one interface part or the radially inner surface of the shear band (22) is roughened prior to application of the RFL adhesive thereon.

10. The method of at least one of the previous claims, comprising drying the adhesive on the at least one interface part (24) or on the radially inner surface of the shear band (22) before assembling the shear band (22) and the connecting structure (16) into the composite structure.

11. The method of at least one of the previous claims, wherein the at least one interface part (24) or the radially inner surface of the shear band (22) is roughened prior to application of the adhesive.

12. The method of at least one of the previous claims, wherein the heat-treatment causes at least part of the neoalkoxy zirconate and/or neoalkoxy titanate content to migrate toward the radially inner surface and to mediate the bond.

13. The method of at least one of the previous claims, wherein the thermoplastic elastomer material comprises a thermoplastic copolyester, a thermoplastic polyamide or a thermoplastic polyurethane, and/or wherein the thermoplastic elastomer material comprises at least one of terephthalate moieties, secondary amine functional groups, tertiary amine functional groups, and amide groups.

## Patentansprüche

1. Verfahren zur Herstellung eines Nicht-Luftreifens (10), wobei das Verfahren das Folgende umfasst:
das Anbringen eines Scherbandes (22), das einen vulkanisierbaren Kautschuk umfasst; wobei das Scherband (22) eine in der radialen Richtung innere Oberfläche umfasst, die durch den vulkanisierbaren Kautschuk erzielt wird;
das Anbringen einer Verbindungsstruktur (16), die dazu bestimmt ist, das Scherband (22) mit einer Radnabe zu verbinden, wobei die Verbindungsstruktur (16) mindestens ein Schnittstellenelement (24) umfasst, das aus einem thermoplastischen Elastomer-material hergestellt ist;
das Aufbringen eines Klebstoffs auf das oben genannte Schnittstellenelement (24), wobei der Klebstoff einen RFL-Klebstoff oder eine Lösung von mindestens einem Element, ausgewählt aus Neoalkoxyzirkonat und Neoalkoxytitanat darstellt oder umfasst;
das Zusammensetzen des Scherbandes (22) und der Verbindungsstruktur (16), um eine Verbundstruktur zu erzielen; wobei das Zusammensetzen des Scherbandes (22) und der Verbindungsstruktur (16) das in Kontakt Bringen des mindestens einen Schnittstellenelements (24) mit der in der radialen Richtung inneren Oberfläche des Scherbandes (22) umfasst; und
das Festkleben des Scherbandes (22) mit der Verbindungsstruktur (16) durch eine Wärmebehandlung der Verbundstruktur.

2. Verfahren nach Anspruch 1, wobei der vulkanisierbare Kautschuk mindestens einen Gehalt besitzt, der aus einem Neoalkoxyzirkonatgehalt und einem Neoalkoxytitanatgehalt ausgewählt ist; und wobei mindestens ein Teil des Neoalkoxyzirkonatgehalts und des Neoalkoxytitanatgehalts vorzugsweise das Mittel darstellt, das zum Erzielen einer festen Bindung verwendet wird.

3. Verfahren nach Anspruch 1 oder 2, wobei die Verbundstruktur in einer Form zusammengesetzt wird oder nach dem Zusammensetzen in einer Form angebracht wird; und wobei die Wärmebehandlung der Verbundstruktur das Brennen der Verbundstruktur in der Form umfasst.

4. Verfahren nach mindestens einem der vorhergehenden Ansprüche, wobei das thermoplastische Elastomer-material mindestens einen Bestandteil umfasst, der aus Esteranteilen, Terephthalatanteilen, funktionellen Gruppen auf der Basis von sekundären Aminen, funktionellen Gruppen auf der Basis von tertiären Aminen, sowie Amidgruppen, ausgewählt ist.

5. Verfahren nach mindestens einem der vorhergehenden Ansprüche, wobei das thermoplastische Elastomer-material einen thermoplastischen Copolyester oder ein thermoplastisches Polyamid umfasst.

6. Verfahren nach mindestens einem der vorhergehenden Ansprüche, wobei die Wärmebehandlung der Verbundstruktur das Erhitzen der Verbundstruktur auf eine Temperatur umfasst, die in einem Bereich von 120 °C bis 200 °C oder in einem Bereich von 140 °C bis 200 °C liegt.

7. Verfahren nach mindestens einem der vorhergehenden Ansprüche, das Folgendes umfasst : das Trocknen und das Vorhärten des RFL-Klebstoffs auf dem mindestens einen Schnittstellenelement (24) oder auf der in der radialen Richtung inneren Oberflächen des Scherbandes (22) vor dem Zusammensetzen des Scherbandes (22) und der Verbindungsstruktur (16), um die Verbundstruktur zu erzielen.

8. Verfahren nach mindestens einem der vorhergehenden Ansprüche, wobei der RFL-Klebstoff einen Polymerlatex umfasst, der auf mindestens einem Kautschuk basiert, der aus Polyisoprenkautschuk, Styrolbutadienkautschuk, Acrylnitrilbutadienkautschuk, hydriertem Acrylnitrilbutadienkautschuk, epoxidiertem Naturkautschuk und Kautschuk auf 2-Vinylpyridinbasis, ausgewählt ist

9. Verfahren nach mindestens einem der vorhergehenden Ansprüche, wobei das mindestens eine Schnittstellenelement oder die in der radialen Richtung innere Oberfläche des Scherbandes (22), vor dem darauf Auftragen des RFL-Klebstoffs, aufgeraut wird.

10. Verfahren nach mindestens einem der vorhergehenden Ansprüche, das Folgendes umfasst : das Trocknen des Klebstoffs auf dem mindestens einen Schnittstellenelement (24) oder auf der in der radialen Richtung inneren Oberflächen des Scherbandes (22) vor dem Zusammensetzen des Scherbandes (22) und der Verbindungsstruktur (16), um die Verbundstruktur zu erzielen.

11. Verfahren nach mindestens einem der vorhergehenden Ansprüche, wobei das mindestens eine Schnittstellenelement (24) oder die in der radialen Richtung innere Oberfläche des Scherbandes (22), vor dem Auftragen des RFL-Klebstoffs, aufgeraut wird.

12. Verfahren nach mindestens einem der vorhergehenden Ansprüche, wobei die Wärmebehandlung bewirkt, dass mindestens ein Teil des Gehalts an Neoalkoxyzirkonat und/oder Neoalkoxytitanat in Richtung der in der radialen Richtung inneren Oberfläche wandert und als Mittel zum Verkleben dient.

13. Verfahren nach mindestens einem der vorhergehenden Ansprüche, wobei das thermoplastische Elastomer-material einen thermoplastischen Copolyester, ein thermoplastisches Polyamid oder ein thermoplastisches Polyurethan umfasst und/oder wobei das thermoplastische Elastomer-material mindestens ein Element umfasst, das aus Esterfraktionen, Terephthalatfraktionen, funktionellen Gruppen auf der Basis von sekundären Aminen, funktionellen Gruppen auf der Basis von tertiären Aminen, sowie Amidgruppen, ausgewählt ist.

## Revendications

1. Procédé destiné à la production d'un bandage non pneumatique (10), le procédé comprenant le fait de :
procurer une bande de cisaillement (22) qui comprend un caoutchouc vulcanisable ; dans lequel la bande de cisaillement (22) possède une surface, interne dans la direction radiale, que l'on obtient par l'intermédiaire du caoutchouc vulcanisable ;
procurer une structure de liaison (16) qui est destinée à relier la bande de cisaillement (22) à un moyeu de roue, dans lequel la structure de liaison (16) comprend au moins un élément (24) faisant office d'interface qui est réalisé à partir d'une matière élastomère thermoplastique ;
appliquer un adhésif sur ledit élément (24) faisant office d'interface, dans lequel l'adhésif représente ou comprend un adhésif de type RFL ou une solution d'au moins un élément choisi parmi un néoalcoxy zirconate et un néoalcoxy titanate ;
assembler la bande de cisaillement (22) et la structure de liaison (16) afin d'obtenir une structure composite ; dans lequel l'assemblage de la bande de cisaillement (22) et de la structure de liaison (16) comprend le fait d'amener ledit au moins un élément (24) faisant office d'interface en contact avec la surface, interne dans la direction radiale, de la bande de cisaillement (22) : et
coller solidement la bande de cisaillement (22) à la structure de liaison (16) par l'intermédiaire d'un traitement thermique de la structure composite.

2. Procédé selon la revendication 1, dans lequel le caoutchouc vulcanisable possède au moins une teneur choisie parmi une teneur en néoalcoxy zirconate et une teneur en néoalcoxy titanate ; et dans lequel au moins une partie de ladite teneur en néoalcoxy zirconate et de ladite teneur en néoalcoxy titanate représente de préférence le moyen utilisé pour obtenir un collage résistant.

3. Procédé selon la revendication 1 ou 2, dans lequel la structure composite est assemblée dans un moule ou est placée dans un moule après l'assemblage ; et dans lequel le traitement thermique de la structure composite comprend la cuisson de la structure composite dans le moule.

4. Procédé selon au moins une des revendications précédentes, dans lequel la matière élastomère thermoplastique comprend au moins un élément qui est choisi parmi des fractions d'esters, des fractions de téréphtalate, des groupes fonctionnels à base d'amines secondaires, des groupes fonctionnels à base d'amines tertiaires, ainsi que des groupes amides.

5. Procédé selon au moins une des revendications précédentes, dans lequel la matière élastomère thermoplastique comprend un copolyester thermoplastique ou un polyamide thermoplastique.

6. Procédé selon au moins une des revendications précédentes, dans lequel le traitement thermique de la structure composite comprend le fait de chauffer la structure composite jusqu'à une température qui se situe dans une plage allant de 120 °C à 200 °C ou dans une plage allant de 140 °C à 200 °C.

7. Procédé selon au moins une des revendications précédentes, qui comprend le fait de sécher et de procéder à un durcissement préalable de l'adhésif de type RFL sur ledit au moins un élément (24) faisant office d'interface ou sur la surface, interne dans la direction radiale, de la bande de cisaillement (22) avant d'assembler la bande de cisaillement (22) et la structure de liaison (16) pour obtenir la structure composite.

8. Procédé selon au moins une des revendications précédentes, dans lequel l'adhésif de type RFL englobe un latex polymère basé sur au moins un caoutchouc choisi parmi un caoutchouc de polyisoprène, un caoutchouc de styrène butadiène, un caoutchouc d'acrylonitrile butadiène, un caoutchouc d'acrylonitrile butadiène hydrogéné, du caoutchouc naturel époxydé et un caoutchouc à base de 2-vinylpyridine.

9. Procédé selon au moins une des revendications précédentes, dans lequel ledit au moins un élément faisant office d'interface ou la surface, interne dans la direction radiale, de la bande de cisaillement (22) est rendu rugueux ou est rendue rugueuse avant que l'on y applique l'adhésif de type RFL.

10. Procédé selon au moins une des revendications précédentes, qui comprend le fait de sécher l'adhésif sur ledit au moins un élément (24) faisant office d'interface ou sur la surface, interne dans la direction radiale, de la bande de cisaillement (22) avant d'assembler la bande de cisaillement (22) et la structure de liaison (16) afin d'obtenir la structure composite.

11. Procédé selon au moins une des revendications précédentes, dans lequel ledit au moins un élément (24) faisant office d'interface ou la surface, interne dans la direction radiale, de la bande de cisaillement (22) est rendu rugueux ou est rendue rugueuse avant que l'on y applique l'adhésif.

12. Procédé selon au moins une des revendications précédentes, dans lequel le traitement thermique fait en sorte qu'au moins une partie de la teneur en néoalcoxy zirconate et/ou en néoalcoxy titanate migre en direction de la surface, interne dans la direction radiale, et intervient comme moyen destiné au collage.

13. Procédé selon au moins une des revendications précédentes, dans lequel la matière élastomère thermoplastique comprend un copolyester thermoplastique, un polyamide thermoplastique ou un polyuréthane thermoplastique, et/ou dans lequel la matière élastomère thermoplastique comprend au moins un élément qui est choisi parmi des fractions d'esters, des fractions de téréphtalate, des groupes fonctionnels à base d'amines secondaires, des groupes fonctionnels à base d'amines tertiaires, ainsi que des groupes amides.
